# EUROPÄISCHE PATENTSCHRIFT

(11) **EP 4 437 042 B1**
(45) Veröffentlichungstag und Bekanntmachung des Hinweises auf die Patenterteilung: **05.11.2025**
(21) Anmeldenummer: 22817648.3
(22) Anmeldetag: 11.11.2022
(51) Int. Cl.: C08L 67/02, C08K 5/1515, C08L 63/00, C08L 91/00

(54) **THERMOPLASTISCHE MISCHUNGEN**
THERMOPLASTIC MIXTURES
MÉLANGES THERMOPLASTIQUES

(30) Priorität: 22.11.2021 EP 21209466
(43) Veröffentlichungstag der Anmeldung: 02.10.2024
(73) Patentinhaber: BASF SE, 67056 Ludwigshafen am Rhein (DE)
(72) Erfinder: GUBBELS, Erik, 67056 Ludwigshafen (DE); LEHENMEIER, Maximilian, 67056 Ludwigshafen (DE); KLENZ, Rainer, 67454 Hassloch (DE)
(74) Vertreter: BASF IP Association
(86) Internationale Anmeldenummer: PCT/EP2022/081683
(87) Internationale Veröffentlichungsnummer: WO 2023/088806

(56) Entgegenhaltungen:
- WO-A1-02/061013
- US-A- 5 310 787
- US-A1- 2012 202 931

## Beschreibung

Die Erfindung betrifft thermoplastische Mischungen, enthaltend:
A) 30 bis 100 Gew.-% eines thermoplastischen Blends bestehend aus:
   A-1) 65 bis 75 Gew.-% eines Polyesters,
   A-2) 5 bis 25 Gew.-% eines HD- oder LD-Polyethylens,
   A-3) 3 bis 10 Gew.-% eines lonomers aufgebaut aus mindestens einem Copolymerisat aus:
      3-1) 30 bis 99 Gew.-% Ethylen
      3-2) 0 bis 60 Gew.-% einer oder mehrerer Verbindungen ausgewählt aus der Gruppe bestehend aus 1-Octen, 1-Buten und Propylen und
      3-3) 0,01 bis 50 Gew.-% einer oder mehrerer funktioneller Monomere ausgewählt aus der Gruppe bestehend aus Carbonsäuren, Carbonsäureanhydriden und Carbonsäureestern, mit der Maßgabe, dass der Anteil an Carbonsäuren 30 bis 100 Gew.-%, der Anteil an Carbonsäureanhydriden und/oder Carbonsäureestern komplementär 0 bis 70 Gew.-% beträgt und und der Wasserstoff der Carboxyl-Gruppen der Carbonsäuren in einem Anteil von mindestens 20 % ("Mol-%") an der Gesamtzahl von Carboxyl-Gruppen durch ein Metall ausgewählt aus der Gruppe bestehend aus Natrium, Kalium und Zink ersetzt ist,
      wobei sich die Summe der Anteile der Komponenten 3-1, 3-2 und 3-3 zu 100 Gew.-
         % ergänzt,
   A-4) 0,5 bis 5 Gew.-% eines epoxidierten Öles oder Ölgemisches, worin die zumindest teilweise ungesättigten Fettsäuren in den zugrundeliegenden Fettsäureestern des Öles oder Ölgemisches 12 bis 22 Kohlenstoffatome aufweisen,
      wobei sich die Summe der Anteile der Komponenten A-1, A-2, A-3 und A-4 zu 100 Gew.-% der Komponente A) ergänzt,
B) 0 bis 70 Gew.-% weiterer Zusatzstoffe,
   wobei sich die Summe der Anteile der Komponenten A) und B) zu 100 Gew.-% ergänzt.

Weiter betrifft die Erfindung Formteile und Hohlkörper hergestellt under Verwendung der thermoplastischen Mischungen und insbesondere Hohlkörper hergestellt mittels Blasform-Verfahren unter Verwendung der thermoplastischen Mischungen.

Für die Herstellung von Hohlkörpern und Formteilen aus thermoplastischen Kunststoffen werden in der Regel Mischungen verwendet, welche thermoplastische Kunststoffe, wie z.B. PET oder PBT, enthalten. Damit diese Mischungen den Anforderungen des jeweiligen (Um)Formver-fahrens genügen, müssen sie u.a. bestimmte rheologische Eigenschaften besitzen. Wichtig ist hierbei eine gute Ausgewogenheit zwischen Festigkeit und Zähigkeit einerseits und ausreichender Fließfähigkeit zur bestmöglichen Ausfüllung der Form andererseits.

WO 02/061013 A1 offenbart thermoplastische Zusammensetzungen umfassend Polyethylenterephthalat (PET), Ethylen-Methacrylsäure-Zink-Ionomer und LD-Polyethylen.

In den Publikationen von M. Joshi et al., Journal of Applied Polymer Science, Vol. 43, 311 - 328, 1991 ("D1"), M. Joshi et al., Journal of Applied Polymer Science, Vol. 45, 1837 - 1847 1992 ("D2") und M. Joshi et al., POLYMER Volume 35, Number 17, 3679 - 3685, 1994 ("D3") werden Blends aus PBT und HDPE und die Wirkung von lonomeren auf die Mischbarkeit der beiden Kunststoffe untersucht. Bilden PBT und HDPE alleine zweiphasige Mischungen, so bewirkt die Zugabe des lonomers (eines Ethylen-Methacrylsäure-Copolymers mit teilweisem Ersatz des aciden Wasserstoffs durch Natrium) eine Erhöhung der Kompatibilität des eher polaren PBT und unpolaren HDPE mit neuartigen Eigenschaften der ternären Mischung. So erhöht sich der Dispersionsgrad des HDPE im PBT, die Kristallisationsrate des PBT erhöht sich mit zunehmendem Anteil von lonomer und insgesamt kann die ternäre Phase aus HDPE, PBT und lonomer als einheitliche Legierungsphase angesehen werden.

In der Veröffentlichung WO 1990/14391 A1 ("D4") werden Mischungen beansprucht aus (i) Polyestern, (ii-i) entweder Natrium- oder Kalium-Salzen von Carbonsäuren mit 7 - 25 Kohlenstoff-atomen oder (ii-ii) Natrium- oder Kalium-Salzen von ionischen Copolymeren aus α-Olefinen, welche 2 - 5 Kohlenstoffatome enthalten, und α, β-ethylenisch ungesättigten Carbonsäuren, welche 3 - 5 Kohlenstoffatome enthalten, und (iii) Polyolefinen mit einem massengewichteten Molekurgewicht von 1.000 - 20.000. Gemäß D4 zeichnen sich diese Mischungen durch erhöhte Schlagfestigkeit aus.

In der älteren Europäischen Patentanmeldung 20190021.4 ("D5") werden thermoplastische Blends beansprucht, die Polyester, HD- oder LD-Polyethylen, ein lonomer aus mindestens einem Copolymerisat aus Ethylen, Verbindungen ausgewählt aus der Gruppe 1-Octen, 1-Buten und Propylen und funktionelle Monomere aus der Gruppe der Carbonsäuren, Carbonsäureanhydride und Carbonsäureester sowie gegebenenfalls noch weitere Zusatzstoffe enthalten.

Die Zumischung von epoxidierten Ölen oder Ölgemischen ist im zuvor beschriebenen Stand der Technik jedoch nicht beschrieben.

Aufgabe der vorliegenden Erfindung war es nun, thermoplastische Mischungen zur Verfügung zu stellen, welche zur Herstellung von Hohlkörpern und Formteilen geeignet sind und deren Zusammensetzung einerseits die Einstellung einer für die Prozessierung ausgewogenen Balance zwischen Fließfähigkeit, Viskosität und Kristallisationsgeschwindigkeit gestattet und andererseits zu der benötigten Festigkeit und Schlagzähigkeit in den gefertigten Hohlkörpern und Formteilen führt

Demgemäß wurden die eingangs definierten thermoplastischen Mischungen gefunden. Bevorzugte Ausführungsformen sind den Unteransprüchen zu entnehmen.

Als Komponente A enthalten die erfindungsgemäßen thermoplastischen Mischungen 30 bis 100 Gew.-% eines thermoplastischen Blends bestehend aus:
A) 30 bis 100 Gew.-% eines thermoplastischen Blends bestehend aus:
   A-1) 65 bis 75 Gew.-% eines Polyesters,
   A-2) 5 bis 25 Gew.-% eines HD- oder LD-Polyethylens,
   A-3) 3 bis 10 Gew.-% eines lonomers aufgebaut aus mindestens einem Copolymerisat aus:
      3-1) 30 bis 99 Gew.-% Ethylen
      3-2) 0 bis 60 Gew.-% einer oder mehrerer Verbindungen ausgewählt aus der Gruppe bestehend aus 1-Octen, 1-Buten und Propylen und
      3-3) 0,01 bis 50 Gew.-% einer oder mehrerer funktioneller Monomere ausgewählt aus der Gruppe bestehend aus Carbonsäuren, Carbonsäureanhydriden und Carbonsäureestern, mit der Maßgabe, dass der Anteil an Carbonsäuren 30 bis 100 Gew.-%, der Anteil an Carbonsäureanhydriden und/oder Carbonsäureestern komplementär 0 bis 70 Gew.-% beträgt und und der Wasserstoff der Carboxyl-Gruppen der Carbonsäuren in einem Anteil von mindestens 20 % ("Mol-%") an der Gesamtzahl von Carboxyl-Gruppen durch ein Metall ausgewählt aus der Gruppe bestehend aus Natrium, Kalium und Zink ersetzt ist,
      wobei sich die Summe der Anteile der Komponenten 3-1, 3-2 und 3-3 zu 100 Gew.- % ergänzt,
   A-4) 0,5 bis 5 Gew.-% eines epoxidierten Öles oder Ölgemisches, worin die zumindest teilweise ungesättigten Fettsäuren in den zugrundeliegenden Fettsäureestern des Öles oder Ölgemisches 12 bis 22 Kohlenstoffatome aufweisen,
      wobei sich die Summe der Anteile der Komponenten A-1, A-2, A-3 und A-4 zu 100 Gew.-% der Komponente A) ergänzt,

Ergänzend zu 100 Gew.-% enthalten die thermoplastischen Mischungen noch weitere Zusatzstoffe als Komponenten B in einem Anteil von 0 bis 70 Gew.-%.

Bevorzugte thermoplastische Mischungen enthalten Komponente A-1 in einem Anteil von 68 bis 73 Gew.-%, Komponente A-2 in einem Anteil von 18 bis 22 Gew.-%, Komponente A-3 in einem Anteil von 5 bis 10 Gew.-% und Komponente A-4 in einem Anteil von 2 bis 5 Gew.-%.

Angemerkt sei hier, dass zwar üblicherweise als Komponenten A-1, A-2 und A-3 ein spezifisches Polyester-, ein spezifisches HD- oder LD-Polyethylen- bzw. ein spezifisches lonomer-Edukt eingesetzt wird. Es können jedoch auch jeweile Mischungen von solchen Polyester-, HD- oder LD-Polyethylen- bzw. Ionomer-Edukten Verwendung finden. Im Übrigen sei auch angemerkt (was dem Fachmann aber geläufig ist), dass selbst ein spezifisches Polyester-, HD- oder LD-Polyethylen- bzw. Ionomer-Edukt an sich, aufgrund herstellungsbedingter Molmassen-Verteilung, inhärent eine Mischung jeweiliger Polyester-, HD- oder LD-Polyethylen- bzw. lonomer-Edukte darstellt.

Allgemein werden Polyester A-1 auf Basis von aromatischen Dicarbonsäuren und einer aliphatischen oder aromatischen Dihydroxyverbindung verwendet.

Als bevorzugte Dicarbonsäuren sind 2,6-Naphthalindicarbonsäure, Terephthalsäure und Isophthalsäure oder deren Mischungen zu nennen. Bis zu 60 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoff-atomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Eine erste Gruppe bevorzugter Polyester A-1 sind Polyalkylenterephthalate, insbesondere solche mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als besonders bevorzugte Polyester A-1 sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl ("VZ") der Polyester A-1 liegt im Allgemeinen im Bereich von 50 bis 220, vorzugsweise von mindestens 140 ml/g, insbesondere mindestens 145 ml/g (gemessen in einer 0,5 gew.-%igen Lösung in einem Phenol/o-Dichlorbenzolgemisch (Gew.-Verh. 1:1 bei 25°C) gemäß ISO 1628).

Insbesondere bevorzugt sind Polyester, deren Carboxylendgruppengehalt 0 bis 100 mmol/kg, bevorzugt 10 bis 50 mmol/kg und insbesondere 15 bis 40 mmol/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte thermoplastische Mischungen enthalten als Komponente A-1 eine Mischung aus Polyestern, wobei mindestens einer PBT ist. Der Anteil z.B. des Polyethylenterephthalates beträgt vorzugsweise in der Mischung bis zu 50, insbesondere 10 bis 35 Gew.-%, bezogen auf 100 Gew.-% A).

Weiterhin können auch PET-Rezyklate (auch scrap-PET genannt) gegebenenfalls in Mischung mit Polyalkylenterephthalaten wie PBT eingesetzt werden.

Unter Rezyklaten versteht man im Allgemeinen:
1) sogenannte "Post-Industrial-Rezyklate": hierbei handelt es sich um Produktionsabfälle bei der Polykondensation oder bei der Verarbeitung, z.B. Angüsse bei der Spritzgussverarbeitung, Anfahrware bei der Spritzgussverarbeitung oder Extrusion oder Randabschnitte von extrudierten Platten oder Folien.
2) sogenannte "Post-Consumer-Rezyklat": hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwässer, Softdrinks und Säfte.

Beide Arten von Rezyklaten können entweder als Mahlgut oder in Form von Granulat vorliegen. Im letzteren Fall werden die Roh-Rezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, die Rezyklate vorzutrocknen. Der Restfeuchtegehalt nach der Trocknung sollte <0,2 %, insbesondere <0,05 % betragen.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis

100 mol-% Isophthalsäure und 0 bis 100 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 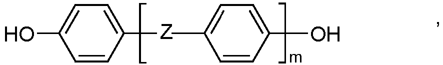 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seien beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte Derivate genannt.

Von diesen werden
   4,4'-Dihydroxydiphenyl,
   2,4-Di-(4'-hydroxyphenyl)-2-methylbutan
   α,α'-Di-(4-hydroxyphenyl)-p-diisopropylbenzol,
   2,2-Di-(3'-methyl-4'-hydroxyphenyl)propan und
   2,2-Di-(3'-chlor-4'-hydroxyphenyl)propan,
sowie insbesondere
   2,2-Di-(4'-hydroxyphenyl)propan
   2,2-Di-(3',5-dichlordihydroxyphenyl)propan,
   1,1-Di-(4'-hydroxyphenyl)cyclohexan,
   3,4'-Dihydroxybenzophenon,
   4,4'-Dihydroxydiphenylsulfon und
   2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im Allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel^{®} (DuPont).

Als Polyester sollen erfindungsgemäß auch halogenfreie Polycarbonate verstanden werden. Geeignete halogenfreie Polycarbonate sind beispielsweise solche auf Basis von Diphenolen der allgemeinen Formel 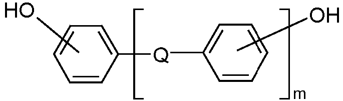 worin Q eine Einfachbindung, eine C₁- bis C₈-Alkylen-, eine C₂- bis C₃-Alkyliden-, eine C₃- bis C₆-Cycloalkylidengruppe, eine C₆- bis C₁₂-Arylengruppe sowie -O-, -S- oder -SO₂- bedeutet und m eine ganze Zahl von 0 bis 2 ist.

Die Diphenole können an den Phenylenresten auch Substituenten haben wie C₁- bis C₆-Alkyl oder C₁- bis C₆-Alkoxy.

Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000 g/mol.

Die Diphenole der allgemeinen Formel sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Als weitere geeignete Komponenten A) seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei an dieser Stelle auf die EP-A 711 810 verwiesen.

Weitere geeignete Copolycarbonate mit Cycloalkylresten als Monomereinheiten sind in der EP-A 365 916 beschrieben.

Als Komponente A-3 enthalten die erfindungsgemäßen thermoplastischen Mischungen 10 bis 25 Gew.-% eines lonomers aufgebaut aus mindestens einem Copolymerisat aus:
3-1) 30 bis 99 Gew.-% Ethylen
3-2) 0 bis 60 Gew.-% einer oder mehrerer Verbindungen ausgewählt aus der Gruppe bestehend aus 1-Octen, 1-Buten und Propylen und
3-3) 0,01 bis 50 Gew.-% einer oder mehrerer funktioneller Monomere ausgewählt aus der Gruppe bestehend aus Carbonsäuren, Carbonsäureanhydriden und Carbonsäureestern, mit der Maßgabe, dass der Anteil an Carbonsäuren 30 bis 100 Gew.-%, der Anteil an Carbonsäureanhydriden und/oder Carbonsäureestern komplementär 0 bis 70 Gew.-% beträgt und und der Wasserstoff der Carboxyl-Gruppen der Carbonsäuren in einem Anteil von mindestens 20 % ("Mol-%") an der Gesamtzahl von Carboxyl-Gruppen durch ein Metall ausgewählt aus der Gruppe bestehend aus Natrium, Kali-um und Zink ersetzt ist,
wobei sich die Summe der Anteile der Komponenten 3-1, 3-2 und 3-3 zu 100 Gew.-% ergänzt.

Bevorzugte Metallionen sind Natrium, Kalium oder Zink, insbesondere Natrium oder Kalium, oder deren Mischungen. Besonders bevorzugt ist die Verwendung von Natrium. Der prozentuale Anteil der Neutralisierung lässt sich beispielsweise durch Flammen-Atomabsorptionsspektrometrie mittle handelsüblicher Geräte bestimmen.

Unter lonomeren versteht man, beispielsweise gemäß Römpp Online Lexikon, Georg Thieme Verlag, August 2008, ionische Polymere, welche große Anteile hydrophober Monomere und meist kleine Anteile von Comonomeren enthalten, die ionische Gruppen tragen.

Beispiele für mögliche Ionomere der Komponenten A-3 sind auch in der Publikation EP 0 419 274 beschrieben.

Diese Ionomeren sind durch direkte Copolymerisation erhältlich und werden mittels einer nachträglichen Reaktion (beispielsweise mit Alkalilaugen für die Herstellung der Alkali-haltigen lonomere) zu Salzen umgesetzt.

Bevorzugte Komponenten 3-3 sind ausgewählt aus der Gruppe bestehend aus ethylenisch ungesättigten Monocarbonsäuren, Dicarbonsäuren und funktionellen Derivaten dieser Säuren.

Derartige bevorzugte Komponenten 3-3 sind insbesondere ausgewählt aus der Gruppe bestehend aus Acrylsäure, Methacrylsäure, Maleinsäure, Fumarsäure, Maleinsäureanhydrid, Acrylsäureester und Methacrylsäurester mit jeweils 1 bis 18-C-Atomen im Alkoholteil der letztgenannten Ester.

Grundsätzlich eignen sich alle primären, sekundären und tertiären C₁-C₁₈-Alkylester der Acrylsäure oder Methacrylsäure, doch werden Ester mit 1 bis 12 C-Atomen, insbesondere mit 2 bis 10 C-Atomen bevorzugt.

Beispiele hierfür sind Methyl-, Ethyl-, Propyl-, n-, i-Butyl- und t-Butyl-, 2-Ethylhexyl-, Octyl- und Decylacrylate und die entsprechenden Ester der Methacrylsäure. Unter diesen sind n-Butylacrylat und 2-Ethylhexylacrylat besonders hervorzuheben.

Anstelle der Ester oder zusätzlich zu diesen können in den Olefinpolymerisaten latent säurefunktionelle Monomere ethylenisch ungesättigter Mono- oder Dicarbonsäuren enthalten sein. Als Beispiele dafür seien als Monomere der Komponente 3-3 tertiäre Alkylester der Acrylsäure, Methacrylsäure, insbesondere tert.-Butylacrylat, tert.-Butylmethacrylat oder Dicarbonsäurederivate wie Monoester der Maleinsäure und Fumarsäure oder Derivate dieser Säuren genannt.

Als latent säurefunktionelle Monomere sollen solche Verbindungen verstanden werden, die unter den Polymerisationsbedingungen und/oder bei der Einarbeitung der Olefinpolymerisate in die Formmassen freie Säuregruppen bilden.

Bevorzugt enthält die Komponente Komponente A-3 als Komponenten
3-1) 50 bis 99 Gew.-% Ethylen
3-2) 0 bis 50 Gew.-% einer oder mehrerer Verbindungen ausgewählt aus der Gruppe bestehend aus 1-Octen, 1-Buten und Propylen und
3-3) 0,05 bis 50 Gew.-% einer oder mehrerer funktioneller Monomere ausgewählt aus der Gruppe bestehend aus Carbonsäuren, Carbonsäureanhydriden und Carbonsäureestern.

In einer weiteren Bevorzugung enthält Komponente A-3 als Komponenten
3-1) 50 bis 90 Gew.-% Ethylen
3-2) 0 bis 50 Gew.-% einer oder mehrerer Verbindungen ausgewählt aus der Gruppe bestehend aus 1-Octen, 1-Buten und Propylen und
3-3) 2 bis 50 Gew.-% einer oder mehrerer funktioneller Monomere ausgewählt aus der Gruppe bestehend aus Carbonsäuren, Carbonsäureanhydriden und Carbonsäureestern.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im Allgemeinen im Bereich von 1 bis 80 g/10 min (gemessen bei 190°C und 2,16 kg Belastung).

Das Molekulargewicht dieser Ethylen-α-Olefin-Copolymere liegt zwischen 10.000 und 500.000 g/mol, bevorzugt zwischen 15.000 und 400.000 g/mol (Mn, bestimmt mittels GPC in 1,2,4-Trichlorbenzol mit Polystyrol-Eichung).

In einer besonderen Ausführungsform werden mittels sog. single site catalysts hergestellte Ethylen-α-Olefin-Copolymere eingesetzt. Weitere Einzelheiten können der US 5,272,236 entnommen werden. In diesem Fall weisen die Ethylen-α-Olefin-Copolymere eine für Polyolefine enge Molekulargewichtsverteilung kleiner 4, vorzugsweise kleiner 3,5 auf.

Als Komponente A-4 enthalten die erfindungsgemäßen thermoplastischen Mischungen epoxidiertes Öl oder Ölgemisch, worin die zumindest teilweise ungesättigten Fettsäuren in den zugrundeliegenden Fettsäureestern des Öles oder Ölgemisches 12 bis 22 Kohlenstoffatome aufweisen. Solche Öle als Ausgangsmaterialien für die Epoxidierung können petrochemischen, pflanzlichen oder tierischen Ursprungs sein und sowohl in reiner Form als auch miteinander gemischt vorliegen und dementsprechend den theromplastischen Mischungen als reine epoxidierte Öle oder auch Mischungen solcher epoxidierter Öle zugegeben werden.

US-Schrift 9,034,965 B2 beschreibt in der Spalte 2 ab Zeile 33 bis Spalte 3, Zeile 12 verschiedene Öle und deren Mischungen, welche einer Epoxidierung unterzogen werden können. Auch solche epoxidierten Öle und Ölmischungen können erfindungsgemäß Verwendung finden.

Vorzugsweise werden epoxidierte Öle auf Basis pflanzlicher Öle ausgewählt aus der Gruppe bestehend aus Sojaöl, Leinöl, Rapsöl, Rizinusöl, Leindotteröl, Baumwollsamenöl, Olivenöl, Erdnussöl, Sonnenblumenöl, Maiskeimöl und Hanföl verwendet.

Insbesondere kommen in Betracht epoxidierte Öle auf Basis pflanzlicher Öle ausgewählt aus der Gruppe bestehend aus Sojaöl, Leinöl, Rapsöl und Rizinusöl.

Als Komponente B können die erfindungsgemäßen Formmassen 0 bis 70 Gew.-%, insbesondere bis zu 50 Gew.-% weiterer Zusatzstoffe und Verarbeitungshilfsmittel enthalten, welche verschieden von Komponente A sind, bezogen auf 100 Gew.% der Summe der Komponenten A und B.

Übliche Zusatzstoffe B sind beispielsweise in Mengen bis zu 40 Gew.-%, vorzugsweise bis zu 15 Gew.-% kautschukelastische Polymerisate (oft auch als Schlagzähmodifier, Elastomere oder Kautschuke bezeichnet).

Beispiele für Schlagzähmodifier sind Kautschuke, welche funktionelle Gruppen aufweisen können. Es können auch Mischungen aus zwei oder mehreren unterschiedlichen schlagzähmodifizierenden Kautschuken eingesetzt werden.

Kautschuke, die die Zähigkeit der Formmassen erhöhen enthalten im allgemeinen einen elastomeren Anteil, der eine Glasübergangstemperatur von weniger als -10°C, vorzugsweise von weniger als -30°C aufweist, und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen, bevorzugt Carbonsäureanhydridgruppen. Zu den bevorzugten funktionalisierten Kautschuken zählen funktionalisierte Polyolefinkautschuke, die aus folgenden Komponenten aufgebaut sind:
1. 40 bis 99 Gew.-% mindestens eines alpha-Olefins mit 2 bis 8 C-Atomen,
2. 0 bis 50 Gew.-% eines Diens,
3. 0 bis 45 Gew.-% eines C₁-C₁₂-Alkylesters der Acrylsäure oder Methacrylsäure oder Mischungen derartiger Ester,
4. 0 bis 40 Gew.-% einer ethylenisch ungesättigten C₂-C₂₀-Mono- oder Dicarbonsäure oder eines funktionellen Derivates einer solchen Säure,
5. 0 bis 40 Gew.-% eines Epoxygruppen enthaltenden Monomeren, und
6. 0 bis 5 Gew.-% sonstiger radikalisch polymerisierbarer Monomerer,
wobei die Summe der Komponenten 3) bis 5) mindestens 1 bis 45 Gew.-% beträgt, bezogen auf die Komponenten 1) bis 6).

Als Beispiele für geeignete alpha -Olefine können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornen, wie 5-Ethyliden-2-norbornen, 5-Butyliden-2-norbornen, 2- Methallyl-5-norbornen, 2-Isopropenyl-5-norbornen und Tricyclodiene, wie 3- Methyltricyclo-(5.2.1.0.2.6)-3,8-decadien, oder deren Mischungen genannt. Bevorzugt werden Hexa-1,5-dien, 5-Ethyliden-norbornen und Dicyclopentadien.

Der Diengehalt beträgt vorzugsweise 0,5 bis 50, insbesondere 2 bis 20 und besonders bevorzugt 3 bis 15 Gew.-%, bezogen auf das Gesamtgewicht des Olefinpolymerisats. Beispiele für geeignete Ester sind Methyl-, Ethyl-, Propyl-, n-Butyl, i-Butyl- und 2-Ethyl-hexyl-, Octyl- und Decylacrylate bzw. die entsprechenden Ester der Methacrylsäure. Von diesen werden Methyl-, Ethyl-, Propyl-, n-Butyl- und 2- Ethylhexylacrylat bzw. -methacrylat besonders bevorzugt. Anstelle der Ester oder zusätzlich zu diesen können in den Olefinpolymerisaten auch säurefunktionelle und/oder latent säurefunktionelle Monomere ethylenisch ungesättigter Mono- oder Dicarbonsäuren enthalten sein.

Beispiele für ethylenisch ungesättigte Mono- oder Dicarbonsäuren sind Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Als sonstige Monomere kommen z. B. Vinylester und Vinylether in Betracht.

Besonders bevorzugt sind Olefinpolymerisate aus 50 bis 98,9, insbesondere 60 bis 94,85 Gew.- % Ethylen, und 1 bis 50, insbesondere 5 bis 40 Gew.-% eines Esters der Acryl- oder Methacrylsäure 0,1 bis 20,0, insbesondere 0,15 bis 15 Gew.-% Glycidylacrylat und/oder Glycidylmethacrylat, Acrylsäure und/oder Maleinsäureanhydrid.

Besonders geeignete funktionalisierte Kautschuke sind Ethylen-Methylmethacrylat-Glycidylmethacrylat-, Ethylen-Methylacrylat-Glycidylmethacrylat-, Ethylen-Methyl-acrylat-Glycidylacrylat- und Ethylen-Methylmethacrylat-Glycidylacrylat-Polymere.

Die Herstellung der vorstehend beschriebenen Polymere kann nach an sich bekannten Verfahren erfolgen, vorzugsweise durch statistische Copolymerisation unter hohem Druck und erhöhter Temperatur. Der Schmelzindex dieser Copolymere liegt im Allgemeinen im Bereich von 1 bis 80 g/10 min (gemessen bei 190°C und 2,16 kg Belastung).

Als weitere Gruppe von geeigneten Kautschuken sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im Allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischem oligomerem Octamethyltetrasiloxan oder Tetravinyltetramethyltetrasiloxan hergestellt werden. Diese können beispielsweise mit gamma-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im Allgemeinen von Styrol, alpha-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl-(meth)acrylat, Acrylsäure, Glycidyl(meth)acrylat und Vinyloxazolin. Der Anteil an Monomeren mit funktionellen Gruppen beträgt im Allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im Allgemeinen 1 : 9 bis 9 : 1, bevorzugt 3 : 7 bis 8 : 2.

Derartige Kautschuke sind an sich bekannt und beispielsweise in der Publikation EP 0 208 187 beschrieben. Der Einbau von Oxazingruppen zur Funktionalisierung kann z.B. gemäß EP 0 791 606 erfolgen.

Eine weitere Gruppe von geeigneten Schlagzähmodifiern sind thermoplastische Polyester-Elastomere. Unter Polyester-Elastomeren werden dabei segmentierte Copoly-etherester verstanden, die langkettige Segmente, die sich in der Regel von Poly-(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel TM (Du Pont), Arnitel TM (Akzo) und Pelprene TM (Toyobo Co. Ltd.) erhältlich.

Selbstverständlich können auch Mischungen verschiedener Kautschuke eingesetzt werden.

Als Zusatzstoffe der Komponenten B können faser- oder teilchenförmige Füllstoffe, wie etwa Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat zugegeben werden. Faserförmige Füllstoffe B werden in Mengen bis zu 60 Gew.-%, insbesondere bis zu 35 Gew.-% eingesetzt, teilchenförmige Füllstoffe werden in Mengen bis zu 30 Gew%, insbesondere bis zu 10 Gew% bezogen auf die Gesamtmischung der thermoplastischen Mischung eingesetzt.

Als bevorzugte faserförmige Füllstoffe seien Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Weiter kommen als Füllstoffe laserabsorbierende Materialien, wie beispielsweise Kohlenstofffasern, Russ, Graphit, Graphen oder Kohlenstoffnanoröhrchen in Frage. Diese werden im gegebenen Fall bevorzugt in Mengen unter 1 Gew.-%, besonders bevorzugt unter 0,05 Gew.-% eingesetzt.

Die faserförmigen Füllstoffe können zur besseren Verträglichkeit mit dem Thermoplasten mit einer Silanverbindung oberflächlich vorbehandelt sein. Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:

X NH₂-,

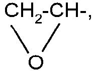

HO-,

n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1.

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,05 bis 5, vorzugsweise 0,1 bis 1,5 und insbesondere 0,2 bis 0,5 Gew.-% (bezogen auf Komponente B) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als Komponente B können die erfindungsgemäßen thermoplastischen Mischungen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Nukleierungsmittel wie Natriumphenylphosphinat, Aluminiumoxid, Siliciumdioxid, Nylon 22 eingesetzt werden sowie Färbemittel wie Farbstoffe und Pigmente oder Weichmacher usw.

Als bevorzugtes Nukleierungsmittel B enthalten die erfindungsgemäßen thermoplastischen Mischungen 0 bis 5 Gew- % Talkum. Dieser wird - falls mit eingesetzt- vorzugsweise in Mengen von 0,001 bis 4, insbesondere von 0,01 bis 1 Gew.-% eingesetzt.

Talkum ist ein hydratisiertes Magnesiumsilikat worin weitere Spurenelemente, wie beispielsweise Mn, Ti, Cr, Ni, Na, und K anwesend sein, und OH-Gruppen durch Fluorid ersetzt sein können.

Besonders bevorzugt wird Talkum eingesetzt, dessen Teilchengrößen zu 100% kleiner 20 µm beträgt. Die Teilchengrößenverteilung wird üblicherweise durch Sedimentationsanalyse bestimmt und beträgt vorzugsweise < 20 µm: 100 Gew.-%, < 10 µm: 99 Gew.-%, < 5 µm: 85 Gew.-%, <3 µm:60 Gew.-%, < 2 µm: 43 Gew.-%. Derartige Produkte sind als Micro-Talc I.T. extra im Handel erhältlich.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische und organische Pigmente sowie Farbstoffe, wie Nigrosin und Anthrachinone als Farbmittel zugesetzt werden. Besonders geeignete Farbmittel sind beispielsweise in EP 1 722 984 B1, EP 1 353 986 B1 oder DE 10054859 A1 genannt.

Als Zusatzstoffe der Komponenten B ("Schmier-, Gleit- und Entformungsmittel") können die erfindungsgemäßen thermoplastischen Mischungen Ester oder Amide gesättigter oder ungesättigter aliphatischer Carbonsäuren mit 10 bis 40, bevorzugt 16 bis 22 C-Atomen mit aliphatischen gesättigten Alkoholen oder Aminen die 2 bis 40, vorzugsweise 2 bis 6 C-Atomen enthalten.

Die Carbonsäuren können ein- oder zweiwertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können ein- bis vierwertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können ein- bis dreiwertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weiter geeignet sind Polyetherpolyole oder Polyesterpolyole, welche mit ein- oder mehrwertigen Carbonsäuren, vorzugsweise Fettsäuren, verestert bzw. verethert sind. Geeignete Produkte sind im Handel beispielsweise als Loxiol^{®} EP 728 der Firma Henkel KGaA erhältlich.

Bevorzugte Ether, welche sich von Alkoholen und Ethylenoxid ableiten, weisen die allgemeine Formel

RO(CH₂CH₂O)ₙH

auf, in der R eine Alkylgruppe mit 6 bis 40 Kohlenstoffatomen und n eine ganze Zahl größer oder gleich 1 bedeutet. Insbesondere bevorzugt für R ist ein gesättigter C₁₆- bis C₁₈-Fettalkohol mit n ungefähr 50, welcher als Lutensol^{®} AT 50 der Firma BASF im Handel erhältlich ist.

Weitere Beispiele für solche Zusatzstoffe ("Schmier-, Gleit- und Entformungsmittel") sind langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Die zuvor aufgeführten Zusatzstoffe der Komponente B ("Schmier-, Gleit- und Entformungsmittel") werden üblicherweise in Mengen bis zu 1 Gew.-% bezogen auf die Gesamtmischung eingesetzt.

Als Beispiele für Weichmacher als Zusatzstoffe der Komponente B seien Phthalsäuredioctylester, Phthalsäuredibenzylester, Phthalsäurebutylbenzylester, Kohlenwasserstofföle, N-(n-Butyl)benzolsulfon-amid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluor-propylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die erfindungsgemäßen thermoplastischen Mischungen können nach an sich bekannten Verfahren hergestellt werden, indem man die Ausgangskomponenten A-1, A-2, A-3 und B in üblichen Mischvorrichtungen wie (Doppel-)Schneckenextrudern, Brabender-Mühlen oder Banbury-Mühlen mischt und anschließend extrudiert. Nach der Extrusion kann das Extrudat abgekühlt und zerkleinert werden. Es können auch einzelne Ausgangskomponenten vorgemischt werden und dann die restlichen Ausgangskomponenten einzeln und/oder ebenfalls gemischt hinzugegeben werden. Die Mischtemperaturen liegen in der Regel bei 230 bis 320°C. Insbesondere können einzelne Komponente, z.B. A-3 und/oder B auch "hot feed" oder direkt in den Einzug des Extruders zugegeben werden.

Im Rahmen der vorliegenden Anmeldung werden weiterhin beansprucht Formteile und Hohlkörper, welche unter Verwendung der erfindungsgemäßen thermoplastischen Mischungen hergestellt worden sind. Insbesondere werden beansprucht Hohlkörper, welche unter Verwendung der erfindungsgemäßen thermoplastischen Mischungen mittels Blasform-Verfahren, wie z.B. Extrusionsblasformen und Streckblasen, hergestellt worden sind.

### Beispiele

### I. Ausgangsmaterialien:

### Komponente A-1:

Polybutylenterephthalat (Ultradur^{®} B 6550 der BASF SE)
Charakterisierung:

| | |
|---|---|
| Carboxylendgruppengehalt: | 34 mmol/kg |
| Viskosität: | 160 ml/g (VZ gemessen in 0,5 gew.-%iger Lösung aus Phenol/o-Dichlorbenzol, 1:1 Mischung bei 25°C gemäß ISO 1628) |
| Schmelzvolumenrate: | 9,5 cm³/10 min (gemessen nach ISO 1133 bei 250°C und 2,16 kg) |

### Komponente A-2:

HDPE HTA 108 (ExxonMobil^{®})
Charakterisierung:

| | |
|---|---|
| Dichte: | 0,961 g/cm3 (gemäß ASTM D1505) |
| Schmelzindex (190°C/2,16 kg): | 0,70 g/10min (gemäß ASTM D1238) |
| Schmelz-Massenflussrate (MFR): | 46 g/10 min (gemäß ASTM D1238) |

### Komponente A-3

SURLYN^{®} 1707 (The Dow Chemical Company)
Charakterisierung:
   Ein lonomer eines Ethylen-Acrylsäure-Copolymer, welches zu 80% neutralisiert mit Natriumionen ist. Der Acrylsäuregehalt beträgt 15 %.

### Komponente A-4

Epoxidiertes Leinöl (TRANSFORMACIONES QUÍMICO - INDUSTRIALES, S.L. - TRAQUISA)
Charakterisierung durch Prozentanteile der Fettsäuren (in Gew.-%:

| | |
|---|---|
| Stearinsäure: | 3-5 |
| Palmitinsäure: | 5-7 |
| Ölsäure (einfach ungesättigt): | 18 - 26 |
| Linolsäure (zweifach ungesättigt): | 14 - 20 |
| Linolensäure (dreifach ungesättigt): | 51 - 56 |

(nachfolgend wird epoxidiertes Leinöl als ELO - Epoxidized Linseed Oil - abgekürzt)

### II. Probenbereitung:

Mischungen von Ultradur^{®} B6550 (Komponente A-1), HDPE HTA108 (Komponente A-2) und Surlyn^{®} 1707 (Komponente A-3) wurden in den in nachfolgender Tabelle 1 angegebenen Anteilen (Gew.-%) in Granulatform gemischt und über Nacht bei 80 °C getrocknet. Diese Mischung wurde in einen Doppelschnecken-Extruder (Typ CTW100, Thermo Fischer Polylab QC) eingespeist, welche vom Hersteller mit Schnecken für Intensivmischung ausgestattet ist. ELO (Komponente A-4) wurde den Mischungen aus Komponente A-1, A-2 und A-3 flüssig zudosiert. Der Extruder wurde bei einer Rotationsgeschwindigkeit von 140 min⁻¹ bei nominell 250 °C betrieben.

Die Schmelztemperatur wurde zu ca. 260 °C bestimmt. Die extrudierten Stränge wurden in einem Wasserbad abgekühlt und granuliert. Das erhaltene Granulat wurde für die Rheotens-Analyse bereitgestellt.

### III. Messdurchführung:

Gemäß ISO 1133 bei 250°C und 2,16 kg wurden die Schmelzvolmenraten der Proben C1, C2 und E1 bis E6 gemessen.

### IV. Messergebnisse:

Gemäß der vorher beschriebenen Norm ISO 1133 wurden zu verschiedenen thermoplastischen Mischungen die Werte der Schmelzvolumenrate (MVR - Melt Volume-Flow Rate) bestimmt. Die Zusammensetzungen der Vergleichsbeispiele C1 und C2 zeigen die Resultate für eine thermoplastische Mischung aus Komponenten A-1, A-2 und A-3 ohne Komponente A-4 (siehe eingangs aufgeführter früherer Stand der Technik D5) und für eine thermoplastische Mischung nur aus Komponenten A-1 und A-4. Die Beispiele E1 bis E6 umfassen dagegen erfindungsgemäße thermoplastische Mischungen.

**Tabelle 1**

| Beispiel | Ultradur^{®} B6550 | HDPE HTA 108 | Surlyn^{®} 1707 | ELO | MVR (cm³/10min) |
|---|---|---|---|---|---|
| C1 | 70 | 20 | 10 | 0 | 32,7 |
| C2 | 99 | 0 | 0 | 1 | 68,6 |
| E1 | 69 | 20 | 10 | 1 | 4,9 |
| E2 | 68 | 20 | 10 | 2 | 3 |
| E3 | 70,5 | 20 | 7,5 | 2 | 2,5 |
| E4 | 69,5 | 20 | 7,5 | 3 | 1,8 |
| E5 | 73 | 20 | 5 | 2 | 3 |
| E6 | 72 | 20 | 5 | 3 | 1,6 |

Während die MVR-Werte für die Vergleichsbespiele C1 und C2 über 30 cm³/10min liegen und damit vergleichsweise dünnflüssiges Verhalten zeigen, weisen die erfindungsgemäßen thermoplastischen Mischungen E1 bis E6 durchweg Werte von unter 5 cm³/10min auf. Da die Messdurchführung (Punkt III.) insbesondere auf das Fließverhalten von thermoplastischen Mischungen abhebt, ist davon auszugehen, dass sich die Eigenschaften der erfindungsgemäßen thermoplastischen Mischungen auch in der Prozessierung durch formgebende Verfahren, wie z.B. Blasformen, widerspiegeln. Im Falle der erfindungsgemäßen thermoplastischen Mischungen ist davon auszugehen, dass das unerwünschte, schnelle Abreißen des Schmelzstrangs ("Wegfließen/Abtropfen der thermoplastischen Mischung") während der Prozessierung wirkungsvoll reduziert wird.

## Patentansprüche

1. Thermoplastische Mischungen, enthaltend:
A) 30 bis 100 Gew.-% eines thermoplastischen Blends bestehend aus:
A-1) 65 bis 75 Gew.-% eines Polyesters,
A-2) 5 bis 25 Gew.-% eines HD- oder LD-Polyethylens,
A-3) 3 bis 10 Gew.-% eines lonomers aufgebaut aus mindestens einem Copolymerisat aus:
3-1) 30 bis 99 Gew.-% Ethylen
3-2) 0 bis 60 Gew.-% einer oder mehrerer Verbindungen ausgewählt aus der Gruppe bestehend aus 1-Octen, 1-Buten und Propylen und
3-3) 0,01 bis 50 Gew.-% einer oder mehrerer funktioneller Monomere ausgewählt aus der Gruppe bestehend aus Carbonsäuren, Carbonsäureanhydriden und Carbonsäureestern, mit der Maßgabe, dass der Anteil an Carbonsäuren 30 bis 100 Gew.-%, der Anteil an Carbonsäureanhydriden und/oder Carbonsäureestern komplementär 0 bis 70 Gew.-% beträgt und und der Wasserstoff der Carboxyl-Gruppen der Carbonsäuren in einem Anteil von mindestens 20 % ("Mol-%") an der Gesamtzahl von Carboxyl-Gruppen durch ein Metall ausgewählt aus der Gruppe bestehend aus Natrium, Kalium und Zink ersetzt ist,
wobei sich die Summe der Anteile der Komponenten 3-1, 3-2 und 3-3 zu 100 Gew.-% ergänzt,
A-4) 0,5 bis 5 Gew.-% eines epoxidierten Öles oder Ölgemisches, worin die zumindest teilweise ungesättigten Fettsäuren in den zugrundeliegenden Fettsäureestern des Öles oder Ölgemisches 12 bis 22 Kohlenstoffatome aufweisen,
wobei sich die Summe der Anteile der Komponenten A-1, A-2, A-3 und A-4 zu 100 Gew.-% der Komponente A) ergänzt,
B) 0 bis 70 Gew.-% weiterer Zusatzstoffe,
wobei sich die Summe der Anteile der Komponenten A) und B) zu 100 Gew.-% ergänzt.

2. Thermoplastische Mischungen nach Anspruch 1, in welchen in der Komponente 3-3 von A-3 der Wasserstoff der Carboxyl-Gruppen der Carbonsäuren in einem Anteil von mindestens 50 % ("Mol-%") an der Gesamtzahl von Carboxyl-Gruppen durch ein Metall ausgewählt aus der Gruppe bestehend aus Natrium, Kalium und Zink ersetzt ist.

3. Thermoplastische Mischungen nach Anspruch 1 oder 2, in welchen das Metall in der Komponente 3-3 von A-3 Natrium, Kalium oder einer Mischung beider in beliebigem Verhältnis entspricht.

4. Thermoplastische Mischungen nach einem oder mehreren der Ansprüche 1 bis 3, in welchen der Anteil an Komponente A-1 68 bis 73 Gew.-%, der Anteil an Komponente A-2 18 bis 22 Gew.-%, der Anteil an Komponente A-3 5 bis 10 Gew.-% und der Anteil der Komponente A-4 2 bis 5 Gew.-% beträgt.

5. Thermoplastische Mischungen nach einem oder mehreren der Ansprüche 1 bis 4, in welchen die Komponente A einen Carboxylendgruppengehalt von 10 bis 50 mmol/kg Polyester aufweist.

6. Thermoplastische Mischungen nach einem oder mehreren der Ansprüche 1 bis 5, in welchen die funktionellen Monomere der Komponente 3-3 von A-3 ausgewählt sind aus der Gruppe bestehend aus ethylenisch ungesättigten Monocarbonsäuren, Dicarbonsäuren und funktionellen Derivaten dieser Säuren.

7. Thermoplastische Mischungen nach einem oder mehreren der Ansprüche 1 bis 6, in welchen die funktionellen Monomere der Komponente 3-3 von A-3 ausgewählt sind aus der Gruppe bestehend aus Acrylsäure, Methacrylsäure, Maleinsäure, Fumarsäure, Maleinsäureanhydrid, Acrylsäureester und Methacrylsäurester mit jeweils 1 bis 18 C-Atomen im Alkoholteil der letztgenannten Ester.

8. Thermoplastische Mischungen nach einem oder mehreren der Ansprüche 1 bis 7, in welchen die Komponente A-3 aufgebaut ist aus
3-1) 50 bis 99 Gew.-% Ethylen
3-2) 0 bis 50 Gew.-% einer oder mehrerer Verbindungen ausgewählt aus der Gruppe bestehend aus 1-Octen, 1-Buten und Propylen und
3-3) 0,05 bis 50 Gew.-% einer oder mehrerer funktioneller Monomere ausgewählt aus der Gruppe bestehend aus Carbonsäuren, Carbonsäureanhydriden und Carbonsäureestern.

9. Thermoplastische Mischungen nach einem oder mehreren der Ansprüche 1 bis 7, in denen die Komponente A-3 aufgebaut ist aus
3-1) 50 bis 90 Gew.-% Ethylen
3-2) 0 bis 50 Gew.-% einer oder mehrerer Verbindungen ausgewählt aus der Gruppe bestehend aus 1-Octen, 1-Buten und Propylen und
3-3) 2 bis 50 Gew.-% einer oder mehrerer funktioneller Monomere ausgewählt aus der Gruppe bestehend aus Carbonsäuren, Carbonsäureanhydriden und Carbonsäureestern.

10. Thermoplastische Mischungen nach einem oder mehreren der Ansprüche 1 bis 9, in welchen die epoxidierten Öle oder Ölgemische der Komponente A-4 sich ableiten von einem oder mehreren pflanzlichen Ölen ausgewählt aus der Gruppe bestehend aus: Sojaöl, Leinöl, Rapsöl, Leindotteröl, Rizinusöl, Baumwollsamenöl, Olivenöl, Erdnussöl, Sonnenblumenöl, Maiskeimöl und Hanföl.

11. Thermoplastische Mischungen nach Anspruch 10, in welchen die epoxidierten Öle oder Ölgemische der Komponente A-4 sich ableiten von einem oder mehreren pflanzlichen Ölen ausgewählt aus der Gruppe bestehend aus: Sojaöl, Leinöl, Rapsöl und Rizinusöl.

12. Thermoplastische Mischungen nach einem oder mehreren der Ansprüche 1 bis 11, in welchen der Anteil an Komponente A-4 1 bis 3 Gew.-% beträgt.

13. Formteile hergestellt unter Verwendung der thermoplastischen Mischungen gemäß einem oder mehreren der Ansprüche 1 bis 12.

14. Hohlkörper hergestellt unter Verwendung der thermoplastischen Mischungen gemäß einem oder mehreren der Ansprüche 1 bis 12.

15. Hohlkörper hergestellt mittels Blasform-Verfahren unter Verwendung der thermoplastischen Mischungen gemäß einem oder mehreren der Ansprüche 1 bis 12.

## Claims

1. A thermoplastic mixture comprising:
A) 30% to 100% by weight of a thermoplastic blend consisting of:
A-1) 65% to 75% by weight of a polyester,
A-2) 5% to 25% by weight of an HD or LD polyethylene,
A-3) 3% to 10% by weight of an ionomer composed of at least one copolymer of:
3-1) 30% to 99% by weight of ethylene
3-2) 0% to 60% by weight of one or more compounds selected from the group consisting of 1-octene, 1-butene and propylene and
3-3) 0.01% to 50% by weight of one or more functional monomers selected from the group consisting of carboxylic acids, carboxylic anhydrides and carboxylic esters with the proviso that the proportion of carboxylic acids is 30% to 100% by weight, the proportion of carboxylic anhydrides and/or carboxylic esters is complementarily 0% to 70% by weight and the hydrogen of the carboxyl groups of the carboxylic acids is replaced by a metal selected from the group consisting of sodium, potassium and zinc in a proportion of at least 20% ("mol%") of the total number of carboxyl groups,
wherein the proportions of components 3-1, 3-2 and 3-3 sum to 100% by weight,
A-4) 0.5% to 5% by weight of an epoxidized oil or oil mixture, in which the at least partially unsaturated fatty acids in the underlying fatty acid esters of the oil or oil mixture have 12 to 22 carbon atoms,
wherein the proportions of components A-1, A-2, A-3 und A-4 sum to 100% by weight of component A),
B) 0% to 70% by weight of further additives,
wherein the proportions of components A) and B) sum to 100% by weight.

2. The thermoplastic mixture according to claim 1, in which in component 3-3 of A-3 the hydrogen of the carboxyl groups of the carboxylic acids is replaced by a metal selected from the group consisting of sodium, potassium and zinc in a proportion of at least 50% ("mol%") of the total number of carboxyl groups,

3. The thermoplastic mixture according to claim 1 or 2, in which the metal in component 3-3 of A-3 is sodium, potassium or a mixture of both in any desired ratio.

4. The thermoplastic mixture according to one or more of claims 1 to 3, in which the proportion of component A-1 is 68% to 73% by weight, the proportion of component A-2 is 18% to 22% by weight, the proportion of component A-3 is 5% to 10% by weight and the proportion of component A-4 is 2% to 5% by weight.

5. The thermoplastic mixture according to one or more of claims 1 to 4, in which component A has a carboxyl end group content of 10 to 50 mmol/kg of polyester.

6. The thermoplastic mixture according to one or more of claims 1 to 5, in which the functional monomers of component 3-3 of A-3 are selected from the group consisting of ethylenically unsaturated monocarboxylic acids, dicarboxylic acids and functional derivatives of these acids.

7. The thermoplastic mixture according to one or more of claims 1 to 6, in which the functional monomers of component 3-3 of A-3 are selected from the group consisting of acrylic acid, methacrylic acid, maleic acid, fumaric acid, maleic anhydride, acrylic esters and methacrylic esters each having 1 to 18 carbon atoms in the alcohol portion of the latter esters.

8. The thermoplastic mixture according to one or more of claims 1 to 7, in which component A-3 is composed of
3-1) 50% to 99% by weight of ethylene
3-2) 0% to 50% by weight of one or more compounds selected from the group consisting of 1-octene, 1-butene and propylene and
3-3) 0.05% to 50% by weight of one or more functional monomers selected from the group consisting of carboxylic acids, carboxylic anhydrides and carboxylic esters.

9. The thermoplastic mixture according to one or more of claims 1 to 7, in which component A-3 is composed of
3-1) 50% to 90% by weight of ethylene
3-2) 0% to 50% by weight of one or more compounds selected from the group consisting of 1-octene, 1-butene and propylene and
3-3) 2% to 50% by weight of one or more functional monomers selected from the group consisting of carboxylic acids, carboxylic anhydrides and carboxylic esters.

10. The thermoplastic mixture according to one or more of claims 1 to 9, in which the epoxidized oils or oil mixtures of component A-4 are derived from one or more vegetable oils selected from the group consisting of: soybean oil, linseed oil, rapeseed oil, false flax oil, castor oil, cottonseed oil, olive oil, peanut oil, sunflower oil, corn oil and hemp oil.

11. The thermoplastic mixture according to claim 10, in which the epoxidized oils or oil mixtures of component A-4 are derived from one or more vegetable oils selected from the group consisting of: soybean oil, linseed oil, rapeseed oil and castor oil.

12. The thermoplastic mixture according to one or more of claims 1 to 11, in which the proportion of component A-4 is 1% to 3% by weight.

13. A molding produced using the thermoplastic mixtures according to one or more of claims 1 to 12.

14. A hollow body produced using the thermoplastic mixtures according to one or more of claims 1 to 12.

15. A hollow body produced by a blow molding process using the thermoplastic mixtures according to one or more of claims 1 to 12.

## Revendications

1. Mélanges thermoplastiques contenant :
A) 30 à 100% en poids d'un mélange thermoplastique constitué par :
A-1) 65 à 75% en poids d'un polyester,
A-2) 5 à 25% en poids d'un polyéthylène HD ou LD,
A-3) 3 à 10% en poids d'un ionomère composé d'au moins un copolymère de :
3-1) 30 à 99% en poids d'éthylène
3-2) 0 à 60% en poids d'un ou de plusieurs composés choisis dans le groupe constitué par le 1-octène, le 1-butène et le propylène et
3-3) 0,01% à 50% en poids d'un ou de plusieurs monomères fonctionnels choisis dans le groupe constitué par les acides carboxyliques, les anhydrides d'acides carboxyliques et les esters d'acides carboxyliques, à condition que la proportion d'acides carboxyliques soit de 30% à 100% en poids, la proportion d'anhydrides d'acides carboxyliques et/ou d'esters d'acides carboxyliques soit de 0% à 70% en poids et l'hydrogène des groupes carboxyle des acides carboxyliques soit remplacé en une proportion d'au moins 20% (« % en mole ») du nombre total de groupes carboxyle par un métal choisi dans le groupe constitué par le sodium, le potassium et le zinc,
la somme des proportions des composants 3-1, 3-2 et 3-3 étant égale à 100% en poids,
A-4) 0,5% à 5% en poids d'une huile époxydée ou d'un mélange d'huiles époxydées, dans laquelle/lequel les acides gras au moins partiellement insaturés dans les esters d'acides gras de base de l'huile ou du mélange d'huiles présentent 12 à 22 atomes de carbone,
la somme des proportions des composants A-1, A-2, A-3 et
A-4 étant égale à 100% en poids du composant A),
B) 0 à 70% en poids d'autres additifs,
la somme des proportions des composants A) et B) étant égale à 100% en poids.

2. Mélanges thermoplastiques selon la revendication 1, dans lesquels, dans le composant 3-3 de A-3, l'hydrogène des groupes carboxyle des acides carboxyliques est remplacé, en une proportion d'au moins 50% (« % en mole ») du nombre total de groupes carboxyle, par un métal choisi dans le groupe constitué par le sodium, le potassium et le zinc.

3. Mélanges thermoplastiques selon la revendication 1 ou 2, dans lesquels le métal dans le composant 3-3 de A-3 correspond au sodium, au potassium ou à un mélange des deux en un rapport quelconque.

4. Mélanges thermoplastiques selon l'une ou plusieurs des revendications 1 à 3, dans lesquels la proportion du composant A-1 est de 68% à 73% en poids, la proportion du composant A-2 est de 18% à 22% en poids, la proportion du composant A-3 est de 5 à 10% en poids et la proportion du composant A-4 est de 2 à 5% en poids.

5. Mélanges thermoplastiques selon l'une ou plusieurs des revendications 1 à 4, dans lesquels le composant A présente une teneur en groupes terminaux carboxyle de 10 à 50 mmoles/kg de polyester.

6. Mélanges thermoplastiques selon l'une ou plusieurs des revendications 1 à 5, dans lesquels les monomères fonctionnels du composant 3-3 de A-3 sont choisis dans le groupe constitué par les acides monocarboxyliques éthyléniquement insaturés, les acides dicarboxyliques éthyléniquement insaturés et les dérivés fonctionnels de ces acides.

7. Mélanges thermoplastiques selon l'une ou plusieurs des revendications 1 à 6, dans lesquels les monomères fonctionnels du composant 3-3 de A-3 sont choisis dans le groupe constitué par l'acide acrylique, l'acide méthacrylique, l'acide maléique, l'acide fumarique, l'anhydride maléique, les esters acryliques et les esters méthacryliques comprenant à chaque fois 1 à 18 atomes de C dans la fraction alcool des esters mentionnés en dernier lieu.

8. Mélanges thermoplastiques selon l'une ou plusieurs des revendications 1 à 7, dans lesquels le composant A-3 est composé de
3-1) 50 à 99% en poids d'éthylène
3-2) 0 à 50% en poids d'un ou de plusieurs composés choisis dans le groupe constitué par le 1-octène, le 1-butène et le propylène et
3-3) 0,05% à 50% en poids d'un ou de plusieurs monomères fonctionnels choisis dans le groupe constitué par les acides carboxyliques, les anhydrides d'acides carboxyliques et les esters d'acides carboxyliques.

9. Mélanges thermoplastiques selon l'une ou plusieurs des revendications 1 à 7, dans lesquels le composant A-3 est composé de
3-1) 50 à 90% en poids d'éthylène
3-2) 0 à 50% en poids d'un ou de plusieurs composés choisis dans le groupe constitué par le 1-octène, le 1-butène et le propylène et
3-3) 2% à 50% en poids d'un ou de plusieurs monomères fonctionnels choisis dans le groupe constitué par les acides carboxyliques, les anhydrides d'acides carboxyliques et les esters d'acides carboxyliques.

10. Mélanges thermoplastiques selon l'une ou plusieurs des revendications 1 à 9, dans lesquels les huiles époxydées ou les mélanges d'huiles époxydées du composant A-4 dérivent d'une ou de plusieurs huiles végétales choisies dans le groupe constitué par : l'huile de soja, l'huile de lin, l'huile de colza, l'huile de caméline, l'huile de ricin, l'huile de graines de coton, l'huile d'olive, l'huile d'arachide, l'huile de tournesol, l'huile de germes de maïs et l'huile de chanvre.

11. Mélanges thermoplastiques selon la revendication 10, dans lesquels les huiles époxydées ou les mélanges d'huiles époxydées du composant A-4 dérivent d'une ou de plusieurs huiles végétales choisies dans le groupe constitué par : l'huile de soja, l'huile de lin, l'huile de colza et l'huile de ricin.

12. Mélanges thermoplastiques selon l'une ou plusieurs des revendications 1 à 11, dans lesquels la proportion du composant A-4 est de 1 à 3% en poids.

13. Pièces façonnées fabriquées à l'aide des mélanges thermoplastiques selon l'une ou plusieurs des revendications 1 à 12.

14. Corps creux fabriqués à l'aide des mélanges thermoplastiques selon l'une ou plusieurs des revendications 1 à 12.

15. Corps creux fabriqués au moyen de procédés de moulage-soufflage à l'aide des mélanges thermoplastiques selon l'une ou plusieurs des revendications 1 à 12.
